Europäisches Patentamt

European Patent Office

Office européen des brevets

(19)

(11) Publication number: **0 110 638**
A2

(12)

# EUROPEAN PATENT APPLICATION

(21) Application number: 83307049.3

(22) Date of filing: 18.11.83

(51) Int. Cl.³: **A 23 L 1/08**, A 23 L 1/222

(30) Priority: 19.11.82 US 443083
16.06.83 US 505012
16.06.83 US 504922
16.06.83 US 504924

(43) Date of publication of application: 13.06.84
Bulletin 84/24

(84) Designated Contracting States: AT BE CH DE FR GB IT
LI LU NL SE

(71) Applicant: THE PROCTER & GAMBLE COMPANY,
301 East Sixth Street, Cincinnati Ohio 45201 (US)

(72) Inventor: Powers, John Robert, 31 Greenfield Ct., Winter
Haven, FL 33880 (US)
Inventor: Moore, Robert Sidney, 1240 Sweetwater Drive,
Cintl. OH 45215 (US)
Inventor: Anderson, Barry Jay, 5583 Kugler Mill Rd., Cintl,
OH 45236 (US)
Inventor: Downton, Galen Edward, 5469 Kirby Ave
Apt. 63, Cintl. OH 45223 (US)
Inventor: Kennedy, Judith Ann, 12006 Pippin Rd., Cintl,
OH 45231 (US)
Inventor: Kearney, Donald Raymond, 6174 Delcrest Ct.,
Fairfield Ohio 45014 (US)
Inventor: Strang, David Arthur, 10038 Winlake Dr., Cintl,
OH 45231 (US)

(74) Representative: Suslic, Lydia et al, Procter & Gamble
European Technical Center Temselaan 100,
B-1820 Strombeek-Bever (BE)

(54) Process for preparing citrus juice concentrate.

(57) A process for preparing a citrus fruit juice concentrate having a high level of citrus juice aroma and flavor volatiles is disclosed. The fruit juice concentrate has at least 33% solids including pulp, sugars, pectin. The citrus juice concentrate contains at least 60% of the volatiles naturally occurring in the juice.

The process involves stripping the volatiles from citrus juice at reduced pressures using a stripping agent, such as steam, at temperaturs about 100°F (37.7°C) to about 160°F (71°C). The volatiles are condensed. The condensate can be separated into two fractions: a limonene-based stripper oil and aqueous stripper essence. The aqueous stripper essence is concentrated, usually with a carrier material. The concentrated aqueous stripper essence composition contains most of the highly volatile aroma and flavor components of the juice. The concentrated aqueous stripper essence and stripper oil compositions are blended with the conventionally concentrated citrus juice to make a superior citrus juice concentrate. Both an aqueous essence (evaporator essence) and an oil essence (evaporator essence oil) can be recovered from the evaporation step. Both of these contain much less of the volatile components than normally would be recovered from the evaporator because these components were removed in the stripping step.

The devolatilized juice is also concentrated using conventional evaporation or concentration techniques.

FRESH JUICE

## PROCESS FOR PREPARING
## CITRUS JUICE CONCENTRATE

### BACKGROUND OF THE INVENTION

Citrus fruits have specific growing seasons. They grow only under certain climatic conditions as occur in places such as Florida, Arizona, California, Texas, Brazil, Spain, Italy, Israel and Egypt. Citrus fruits, in particular orange and grapefruit, are available only for limited periods of time during the year. Thus, certain varieties of these fruits, especially those used for juices, may be periodically in short supply. For instance, Florida Valencia oranges which are used in many commercial orange juices are available only from April through July. In order to have a good quality orange juice available year round, the orange juice must be processed for storage and distribution.

The challenge of producing an orange juice product which is acceptable to a broad range of consumers, involves making a unique product having acceptable flavor (taste), distinctive aroma (smell), acceptable appearance and satisfactory mouthfeel. The aroma and flavor ingredients in oranges and other citrus fruits affect each of these organoleptic properties. This is so even though the aroma and flavor ingredients are present only in relatively small amounts.

Since natural or fresh orange juice contains about 80% to 90% water, the most economical way to store and distribute the juice is in a concentrated form. The bulk of the orange juice commercially processed in the United States has been a frozen concentrated product.

Most commercial concentration processes utilize evaporation techniques to remove the bulk of the water from the juice. However, it is widely recognized that evaporation techniques result in the undesired removal or loss of volatile aroma and flavor compounds along with the water, thereby resulting in a significant deterioration in quality and overall aroma and flavor of the concentrated juice. Evaporation processes involve heating the juice under conditions which promote oxidation of the compounds in the juice as well as flavor degradation due to caramelization of the sugar, browning reactions, and other chemical reactions of the aroma and flavor compounds. While evaporation concentration processes are useful and effective, there is a significant loss of aroma and flavor compounds which occurs. The industry collects an essence material which is concentrated from the first 10% to 30% of the water removed from the juice. This essence can be separated into an aqueous essence and an essence oil. Either can be added back to the juice alone or as a mixture. However, the orange juice concentrate to which the essence materials have been added back does not contain all the highly volatile materials such as ethyl butyrate, ethanol, methanol and acetaldehyde which were present in the starting juice.

The process provided herein removes the volatiles in a sequential manner. The most delicate aroma and flavor compounds are removed first and therefore have less opportunity to be degraded further in the process. The condensation and concentration of these volatiles are also carried out under conditions which preserve the fidelity of the aroma and flavor compounds. The condensed volatiles can be separated into a limonene-based stripper oil and an aqueous stripper essence. Both of these stripper compositions are distinct in their aroma and flavor character.

The present invention produces a juice or citrus juice concentrate which contains a substantial amount of the aroma and flavor volatiles of the citrus juice. The volatile aroma flavor condensate, or aqueous stripper essence and limonene-based stripper oil, which are produced by the process are added back to a citrus concentrate to produce a superior concentrate.

An important objective achieved by the present invention is that a natural orange juice concentrate product is prepared which has the aroma and flavor of natural orange juice. The orange juice concentrate of this invention when reconstituted tastes like freshly squeezed juice. This same process can be used to produce natural lemon, grapefruit, lime and tangerine concentrates, as well as blended citrus juice concentrates.

It is an object of this invention to produce citrus juice concentrate which when reconstituted tastes as good as the starting juice.

It is yet another object of this invention to produce a limonene-based stripper oil from oranges which has a fresh aroma and flavor. The oxidation products of the natural aroma and flavor compounds is also much lower.

It is also an object of this invention to produce an aqueous stripper essence from orange juice which contains the aroma and flavor compounds which give orange juice its fresh quality. The compounds are primarily the ester and aldehyde compounds. This essence is characterized by being very low in ethanol and containing higher levels of the longer chain aldehydes when compared to conventional aqueous essences.

It is also an object of this invention to produce a citrus juice stripper oil which can be used as a flavorant or in a citrus juice concentrate.

It is another object of this invention to produce an aqueous citrus juice aroma and flavor volatile concentrate which can be used as a flavorant in beverages, including carbonated beverages, dry beverage mixes, alcoholic beverages, candies, baked goods and culinary mixes.

These and other objects of this invention will become apparent by the description of the invention below.

All percentages are by weight unless otherwise defined.

## BRIEF DESCRIPTION OF THE DRAWINGS

Figure 1 is a diagram of the process used to prepare the citrus juice concentrates.

Figure 2 is a diagram of a stripper column.

Figures 3 through 7 are typical gas chromatograms obtaine by the methods described herein.

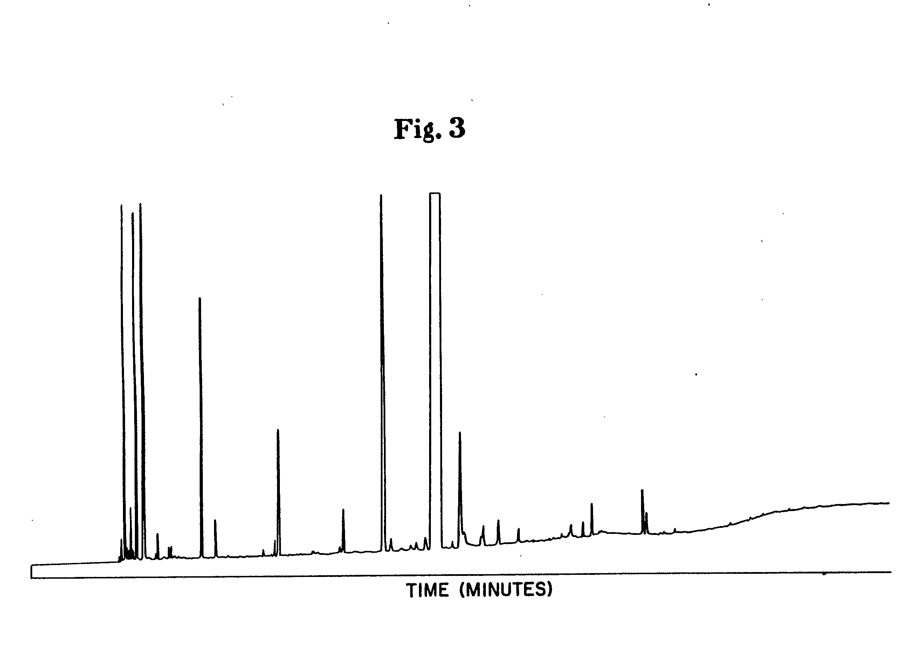

Figure 3 is a frozen orange juice concentrate made accordir to this invention.

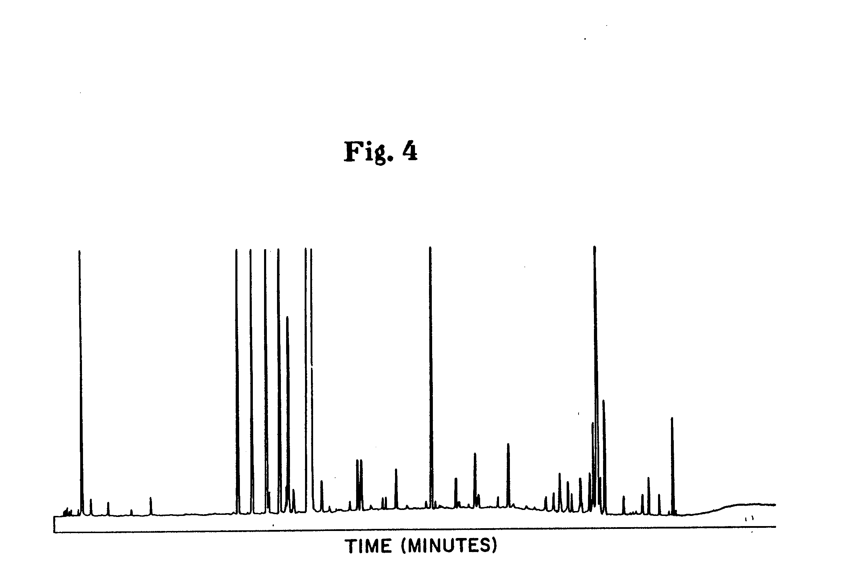

Figure 4 is a limonene-based stripper oil from Valencia oranges.

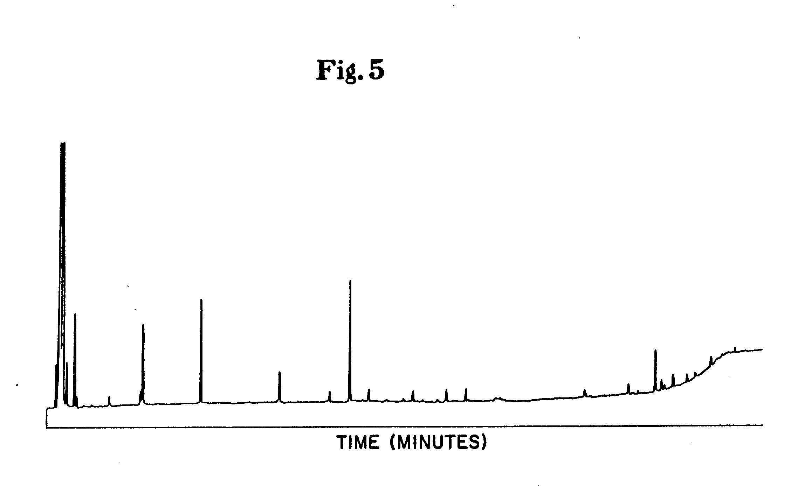

Figure 5 is an aqueous stripper essence from Valencia oranges.

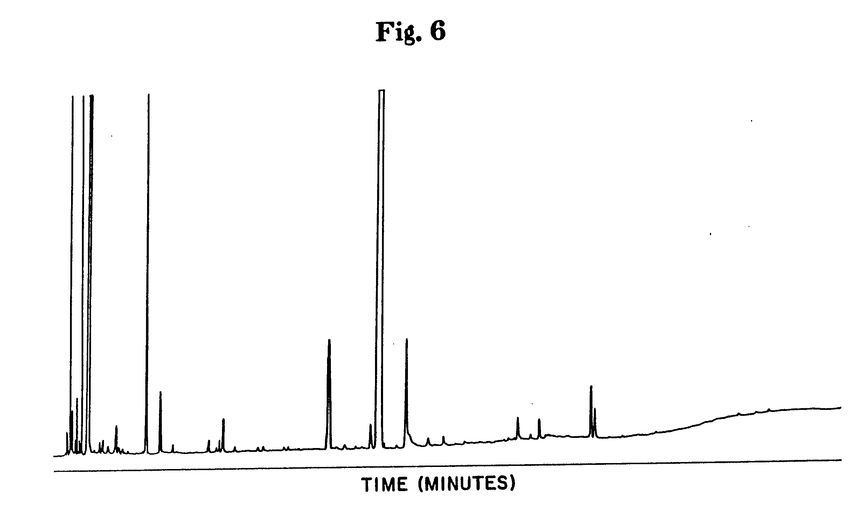

Figure 6 is a concentrated aqueous essence from oranges using orange juice solids as a carrier.

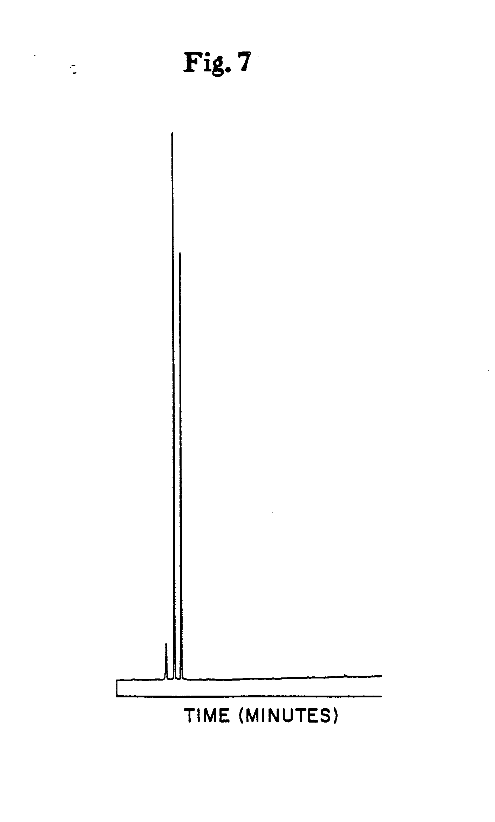

Figure 7 is the alcohol portion of an aqueous stripper essence.

## SUMMARY OF THE INVENTION

The present invention relates to a process for removing t: aroma and flavor volatiles from citrus juices by contacting the juice with a stripping agent, e.g. inert gas or steam, at temperatures in the range of about 100°F (37.7°C) to about 16( (71°C) and at pressures of up to 9 inches of mercury absolut (Hg. absolute) and preferably from about 2 to about 6 inches Hg. absolute. The volatiles stream is condensed at temperatur from 90°F (32°C) to -320°F (-196°C). The exact temperatures condensation will depend upon the pressure in the system. T: condensate can be separated into products when steam is the stripping agent. The lighter water-insoluble phase is a limonene-based stripper oil. The heavier, aqueous phase is ɛ aqueous stripper essence. This aqueous stripper essence and the aqueous condensate is preferably mixed with a carrier ar concentrated to a solids content of from about 20% to about 8 (20° to 88° Brix). Preferably, this concentration is accomplis by freeze concentration. This aqueous stripper essence concentrate and limonene-based stripper oil or the concentrat

-5-

aroma and flavor condensate are blended with a citrus juice concentrate. The citrus juice concentrate can be prepared by any known concentration technique, but for economical purposes it is best to concentrate it using commercial evaporation techniques. Preferably, the concentrated juice is prepared from the juice which has been stripped of its volatiles.

The concentrated citrus juice product produced by this process contains at least 60% of the water-soluble aroma and flavor volatiles originally present in the juice. The condensate from one juice could be blended with other juices to produce blended juice flavors. For example, orange and lemon concentrates and the aroma and flavor volatile concentrates from either or both could be mixed to provide a lemon/orange concentrate.

## DEFINITIONS

"Stripper aroma and flavor condensate" is the composition obtained by condensing the aroma and flavor volatile compounds and the stripping agent. When water is used this is an oil-in-water emulsion of aroma and flavor compounds. The stripper aroma and flavor condensate can be concentrated to form an aroma and flavor concentrate.

"Limonene-based stripper oil" or "stripper oil" is the water-insoluble fraction of the stripper aroma and flavor condensate. The separation of the substantially water-insoluble materials produces a composition which is predominantly limonene but which contains many aroma and flavor volatile compounds. This composition is characterized by the amount and proportion of linalool and nonanal. In addition to these three aroma and flavor compounds, this limonene-based stripper oil essence also contains many other water-insoluble flavor components such as myrcene, pinene, decanal, geranial, neral, among others. It also has low levels of oxidation products.

"Aqueous stripper essence" is the aqueous fraction of the stripper aroma flavor condensate containing the water-soluble aroma and flavor compounds. The aqueous stripper essence of orange juice is characterized by having up to about 2% ethanol concentration. In addition, aqueous stripper essence of orange juice contains the majority of the highly volatile and water-soluble aroma and flavor components of the starting orange juice.

"Evaporator essence oil" is the water-insoluble phase of the essence recovered during the evaporation of the stripped citrus juice, i.e., the juice from which substantially all of the volatiles have been removed.

"Evaporator essence" is the aqueous phase of the essence removed during the evaporation of the stripped juice. Both the evaporator essence and the evaporator essence oil are different from "essences" which are conventionally removed from citrus juice during evaporation concentration.

## DETAILED DESCRIPTION OF THE INVENTION

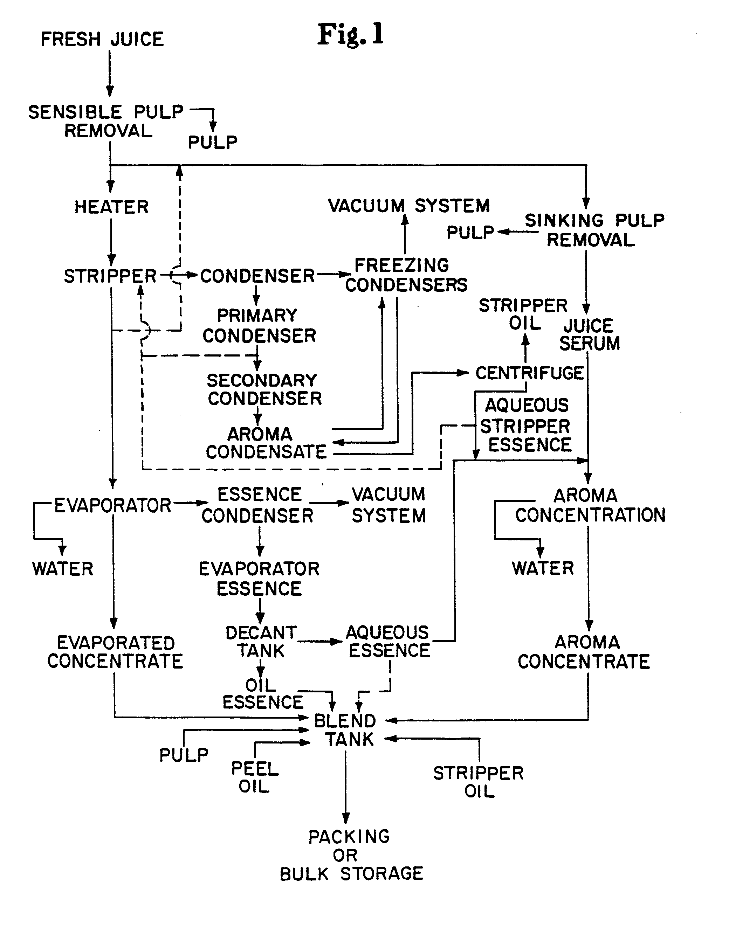

The process for preserving the fresh aroma and flavor of citrus juices is diagrammed in Figure 1. Any citrus fruit can be used in the practice of this invention. Thus, this process is applicable to all the varieties of oranges, e.g. Pineapple, Hamlin, Valencia and Parson Brown, as well as to lemons, limes, grapefruit, tangerines, and kumquats.

The fresh juice is extracted from the fruit using conventional juice extractors and juice finishers. The fresh juice is passed through equipment to remove the large or sensible pulp. Sensible pulp has a particle size greater than about 0.5 mm. Juice finishers, vibrating screens, centrifuges or any combination of these can be used to remove the large pulp. The sensible pulp is removed to prevent it from being macerated as it passes through the stripper and concentrator and to prevent it from being oxidized or degraded during further processing steps. The flavor, texture and appearance of the pulp is preserved so it can be added to the concentrated product at the end of the process. The juice which now contains pulp particles less than 0.5 mm in size is referred to herein as "citrus juice".

## Removal of Volatiles

The citrus juice is passed (via pump 12) through a device such as a heat exchanger (14) to quickly raise the temperature of the citrus juice to the feed temperature of the stripping column. This temperature ranges from about 100°F (37.7°C) to about 160°F (71°C), preferably temperatures of from 125°F (51.7°C) to 140°F (60°C) are used. Any suitable means can be used to heat the citrus juice, e.g. shell and tube, plate or spiral heat exchangers or direct steam injection. Either low pressure steam or hot water can be used as the heating medium in the heat exchangers. -

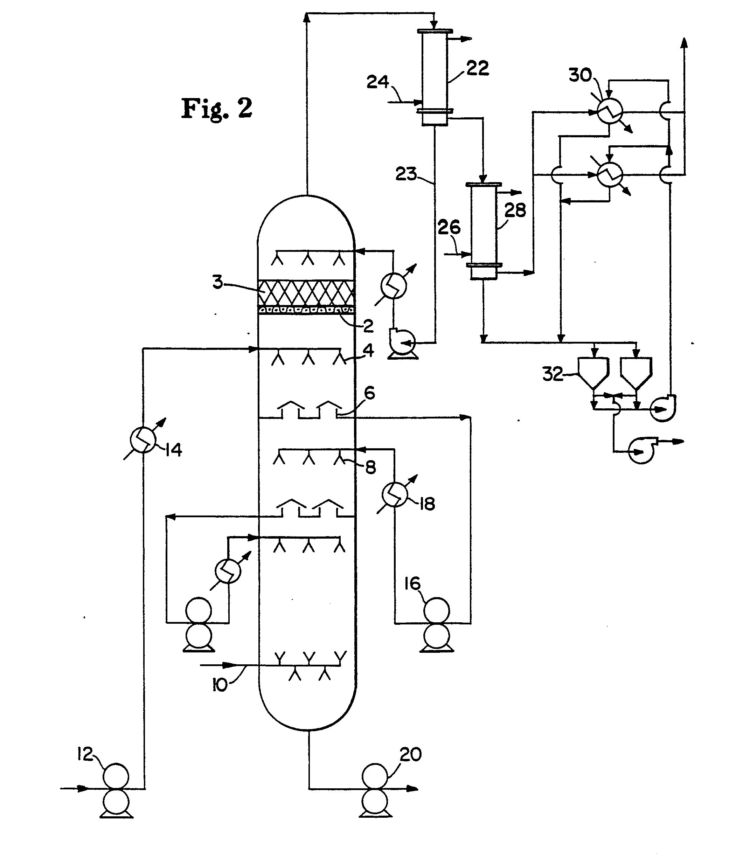

The hot citrus juice is then pumped into the top of a stripper column (see Figure 2) which is operated under vacuum. As illustrated the stripper can consist of a vertical cylindrical vessel encompassing one or more stripping stages. Each stage consists of a means for distributing a fine spray of juice droplets across the whole circular cross section of the vessel (4) and (8). The juice is atomized so that the entire cross section of the stripper is covered with atomized juice droplets. This can be accomplished with pressure atomizing nozzles or by other means such as two-fluid nozzles or spinning disk atomizers. Either hollow or solid cone sprays can be produced.

The juice is contacted with a stripping agent such as steam, or an inert gas, i.e., nitrogen or carbon dioxide, to remove or strip away the aroma and flavor volatiles. Steam is preferred for this purpose because many of the volatiles are soluble in or co-distill with water and are thus easily removed. Condensation of the aroma and flavor volatiles is also easier to accomplish.

Steam or inert gas is introduced through the bottom of the stripper (10). In general, from about 0.3 lbs. to about 1.5 lbs. of steam are used per each pound of soluble solids in the juice. Preferably, from 0.6 to 1.0 lbs. of steam per lb. of solids are used. Cut rate is defined as the pounds of steam per pound of soluble solids in the juice.

It is important that the vapor rising in the stripper mix well with the citrus juice spray, especially in the region near the nozzle so that the volatilized aromatic material can be carried away as part of the vapor stream. The partially or completely stripped citrus juice is collected and pumped (via pump 16) from the bottom of each stage. For the top stage and any intermediate stages the citrus juice is collected on a tray (6) having a number of openings in it to allow for the vapor from the stage below to pass up the column and mix with the spray in each stage. The opening should be covered to prevent the citrus juice spray from passing directly into the stage below. Trays should be designed to minimize the citrus juice holdup so that the overall exposure time of the citrus juice to the 100°F (37.7°C) to 160°F (71°C) temperatures can be minimized. As citrus juice is pumped from one stage to another, it can be passed through heat exchangers (18) to heat the citrus juice to a temperature above the equilibrium temperature in the stripper so that the citrus juice flashes as it leaves the spray nozzles in that stage. In general, the citrus juice should not be heated above 160°F (71°C) for longer than a few seconds.

The quantity of volatile components removed can be increased by increasing either the cut rate, the number of stages or the length of each stage. The amount of additional volatiles removed by increasing the cut rate above about 0.8 or 0.9 is usually small and must be balanced against the higher cost to remove the additional water condensed with the volatiles. Similarly, increasing the number of stages beyond 4 or 5 does not result in large increases in the amount of volatiles removed. The additional residence time of the citrus juice at elevated temperature can result in the creation of off-flavors in the citrus juice. Thus, the cut rate and the number of stages used can be varied to obtain the optimum balance of cost, volatile removal, and minimum degradation.

Care must be taken so that the steam does not impact on the surface of any citrus juice that may be collected at the bottom of

the stripper. Water vapor from the added low pressure steam is passed countercurrently through the juice spray to help remove and carry off the volatile materials as the vapor passes upward through each stage and out of the stripper. In addition to steam, inert gases may also be used to strip the citrus juices. Steam is preferred because the later concentration step removes water in its essentially pure form. When other inert gases are used, they must be separated from the volatiles using pressure equilibration techniques. These processes can cause loss of some of the aroma and flavor volatiles due to the high volatility of the aroma and flavor compounds.

The temperatures in the stripping stages can be from about 100°F (37.7°C) to about 160°F (71°C). Temperatures above 160°F (71°C) cause some degradation of the aroma and flavor of the juice. Preferably, the temperatures will be about 125°F (51.7°C) to about 140°F (60°C). Each stage can be operated at a different temperature. The temperatures can be progressively higher in each stage, or the same in all stages.

The pressure within the stripping column can be up to 9 inches of Hg. absolute and preferably is from about 2 to about 6 inches of mercury absolute. Most preferably, the stripping is carried out at pressures of from 3 to 5 inches of mercury absolute.

The stripped juice is pumped (20) from the last stage and is either sent directly to an evaporator or concentration equipment or cooled and stored prior to evaporation. If the juice is cooled, energy can be saved if the hot juice is used to partially heat the incoming juice. It, in turn, is partially cooled thereby.

## RECOVERY OF VOLATILES

The aroma and flavor volatiles are passed through a demister at the top of the stripper (2) and recovered by condensation at temperatures of 95°F (35°C) to -320°F (-196°C). The actual temperature of condensation will depend upon the pressure within the condensation system. While the majority of the volatile compounds in citrus juices condense around -50°F (-45.5°C) at pressures of 2 to 9 inches of mercury absolute, condenser temperatures from about -60°F (-51°C) to about -320°F (-196°C) are sufficient to condense substantially all of the aroma and flavor volatiles at low pressures.

The condensation can be carried out using shell and tube heat exchangers, condensing in vertical tubes for the liquid condensing, and in the shell of a U-tube exchanger for freezing the condensate. The liquid condensing can also be accomplished in two or more condensers in series using cooling tower water (24) for the first condenser (22) and refrigerated coolant (26) on subsequent condensers (28 and 30). Refrigerated coolants such as glycol and Freon can be used. Steam ejectors, mechanical vacuum pumps, or some combination can be used to reduce the pressure and remove non-condensables.

The aroma and flavor volatile materials which have been gently removed from the citrus juice by the stripping column are preferably condensed in three stages. The first stage condenses primarily the water and some of the aroma and flavor volatiles, and the second and third stages condense the remaining volatiles. The first stage condenser can be at a temperature of from about 60°F (15.6°C) to about 95°F (35°C), and preferably from 60°F (15.6°C) to 80°F (26.7°C). The second stage condenser can be at a temperature of from about 33°F (0.5°C) to about 60°F (15.6°C) and preferably from about 40°F (4°C) to about 50°F (10°C). This will insure collection of most of the water and the lesser volatile flavor and aroma materials (higher boiling). The third condenser (30) is at about -50°F (-45.5°C), and can be as low as liquid nitrogen temperatures (-320°F). The aroma and flavor volatiles are condensed or collected as a frost in this condenser. The collection efficiency of these low temperature condensers can be improved by pre-frosting the condensing surface using steam or a steam-noncondensable gas mixture. This provides more condensation sites for collection of the volatile mixture.

Care must be taken to avoid losing the volatiles which are condensed as the frost when the frost is added back to the liquid portion of the condensate or to a carrier solution for further concentration. One way to accomplish this recombination is to collect the frozen portion on one condenser. After collecting the frost, the condenser is isolated from the vapor system and from the vacuum system and then filled with liquid condensate from the first condenser. This liquid can then be recirculated through the cryogenic condenser to melt the frost. The temperature of this melting should be at about 35°F (1°C) to about 45°F (7°C) so that the volatiles dissolve directly into the cold liquid and do not have an opportunity to volatilize.

The condensate is a mixture of water-soluble volatiles such as ethanol, ethyl butyrate, and acetaldehyde and oil volatiles such as d-limonene, myrcene, and alpha-pinene which are relatively insoluble in water. These volatile materials are present in a relatively stable emulsion of oil in water. Some oil may separate. The oil and aqueous phases can be separated by holding cold for long periods of time, by freezing and thawing, or preferably by centrifuging (32) in a continuous stacked disc hermetic centrifuge. Two clear phases are obtained, an aqueous stripper essence which is nearly free of oil components and a limonene-based stripper oil. Small quantities of a wax-like substance are collected in the centrifuge and must be removed periodically.

The condensed materials are stored in closed tanks with an inert gas blanket and are preferably shielded from light to prevent oxidation of the aroma and flavor compounds. The aqueous aroma flavor condensate can be stored at cool temperatures prior to separation or use. The limonene-based stripper oil can be stored at low temperatures (-10°F) prior to use.

Part of the water can be removed from the aqueous stripper essence by recycling part of the material back to the top of the stripper as shown in Figures 1 and 2. This recycle stream (23) can be heated or cooled in a heat exchanger to the desired temperature. Preferably the temperature is within about 20°F (11°C) of the water temperature corresponding to the equilibrium temperature of water at the pressure used in the stripper. In the top of the stripper the recycled aroma condensate is distributed over packing material (3) incorporated within the top of the stripper (2). Most types of mass transfer packing can be used, such as Berl saddles, Raschig rings, or preferably Goodloe-type wire mesh packing. Enough packing to give the equivalent of 0.5 to 3.0 theoretical transfer units may be used. Preferably this would be packing equivalent to about 2 transfer units.

This recycle (rectification) process can be used to remove from 10% to up to 70% of the water from the aqueous stripper essence and preferably up to 50% or 60% without significant losses of volatile materials in the juice going out the bottom of the stripper.

The vacuum system used for the stripper column can be any commercial system capable of achieving the desired pressures, including multi-stage steam ejectors, vacuum pumps, or combinations. A liquid ring vacuum pump is preferred and a preferred type is one made with stainless steel. When this type of vacuum pump is used, the seal water can be added to the aqueous stripper essence prior to concentration as a way of recovering additional small quantities of valuable volatile components. In addition a small packed column scrubber may be used after the liquid ring vacuum pump to remove virtually all of the valuable volatile materials from the exiting gas stream. When the scrubber is used, the cold water (or other liquid) used as the scrubbing fluid can also be used as the seal fluid for the liquid ring vacuum pump in a countercurrent fashion.

## Aqueous-based Stripper Essence Concentration

Both the condensate from the stripper and the aqueous stripper essence which is separated from this stripper condensate are dilute water solutions of the volatile aroma and flavor compounds from citrus juice. In order to obtain an aroma and flavor composition that can be economically stored for long periods of time or which can be added to a frozen concentrate without causing too much dilution, it is necessary to remove most of the water. When steam is used as the stripping agent, the volatiles usually comprise less than 2% of the composition. The water must be removed in a manner which retains essentially all of the volatile aroma and flavor materials and which avoids oxidation and degradation of the aroma and flavor compounds.

There are several methods which can be used to accomplish the concentration of the aroma and flavor condensate or the aqueous-based stripper essence, if it has been separated. Reverse osmosis, low temperature vacuum distillation and freeze concentration can be used. Vacuum low temperature distillation exposes the volatile aroma and flavor materials to heat, therefore, degradation reactions that are accelerated by even this low temperature (about 160°F) may occur. The time the aroma and flavor condensate is exposed to temperatures above 160°F should be minimized during low temperature distillation. Freeze concentration and reverse osmosis are preferred methods herein.

In order to concentrate the volatiles in the water solution a carrier is usually added. A carrier is not required when vacuum distillation is used to concentrate the aroma flavor condensate.

Any material which is acceptable for food use and compatible with citrus juice can be used as the carrier. Because of the attraction between the aroma flavor volatiles and the citrus juice itself, it is preferred to use the juice as a carrier.

The carrier can be juice, carbohydrates, edible acids, salts of edible acids, soluble proteins or mixtures thereof. The sugars which occur naturally in citrus juices are preferred carbohydrate carriers. Preferably, the sugars will be in about the same ratios as are present in the starting juice. Thus, for orange juice volatiles a carrier comprising 50% sucrose, 25% glucose and 25% fructose could be used. Non-metabolizable sugars such as maltose, and other sugars such as lactose, ribose, xylose can be used. In addition, the sugar alcohols such as xylitol and mannite are also acceptable as carriers. Polymeric carbohydrates such as pectins, dextrins and starch can also be used.

Edible acids also function as carriers. Citric acid is preferred since it naturally occurs in citrus juices. Other acids such as malic, fumaric, and acetic acids can be used or salts of these acids. The taste of the acid will also control the level to which it can be added as a carrier.

A carrier solution which simulates the solids in orange juice is an aqueous solution of 4% to 6% sucrose, 2% to 3% fructose, 2% to 3% glucose, 0.2% to 0.7% citric acid, and 0.1% to 0.2% potassium (as a salt). These percentages are the weight percent in the carrier solution before addition of the aroma flavor condensate.

The carrier is added to the aqueous stripper essence, or the aroma and flavor condensate, at a level of from about 1% to about 50%. The aroma flavor condensate and carrier composition preferably has a solids concentration of from about 1% to about 8%.

The citrus juice carrier can be easily obtained by diverting a small portion of the citrus juice either from the feed to the stripper, from the devolatilized juice leaving the stripper, or from the concentrated devolatilized juice stream. The citrus juice stream can be from 1% to 5% of the total juice flow to the concentrator.

A preferred method of concentrating the aqueous stripper essence condensate is to remove the water by freeze concentration. Freeze concentration requires the presence of sufficient material to suppress the freezing point. Therefore, it is necessary to mix the aroma flavor condensate composition with a small amount of a carrier which will depress the freezing point of the aroma flavor condensate.

Before the carrier and aroma flavor condensate solution enters the freeze concentrator, any material having a particle size greater than about 80 microns is removed. High speed centrifugation can be used to remove these particles, which includes pulp. This prevents plugging of the filters and wash columns in the freeze concentration equipment. Evaporator essence or other aroma and flavor compounds can also be added to the solution before the freeze concentration.

Examples of an apparatus for use in freeze concentration is the Grenco freeze concentration unit available from Grenco B.V., The Netherlands, the FMC freeze concentration units available from FMC Corporation, and Struthers freeze concentration units.

Other companies which supply freeze concentration equipment are CSI (Concentration Specialists, Inc.) of Andover, Mass. and Chicago Bridge & Iron Works.

The object is to remove essentially pure water from the aqueous stripper essence to form a concentrated aroma and flavor and carrier composition. The aqueous stripper essence can be freeze concentrated to about 25% and then freeze dried to a higher concentration, e.g. up to 85%. The freeze drying must be done under conditions such that the frozen aqueous stripper essence does not liquify during the freeze drying process. The aqueous stripper essence should be held below its eutectic temperature.

Other methods of concentrating the aqueous stripper essence carrier solution are reverse osmosis or a combination ultrafiltration/reverse osmosis process. Water is removed from the aroma flavor condensate carrier solution. In this case, the volatile aroma and flavor materials remain with the carrier, i.e. juice or sugar solids, while the water passes through the membrane. See for example U.S. 3,743,513 issued to Tulin (1973) which describes reverse osmosis concentration of juices.

The aqueous stripper essence composition when combined with a carrier can be concentrated from about 20% to about 85%. Preferably the aroma flavor concentrate will have a concentration in the range of about 20% to 50%, and most preferably in the ranges of 25% to 35%.

A typical concentrated aqueous stripper essence from orange juice which has been concentrated using orange juice solids as a carrier has the following composition of volatile aroma and flavor compounds in the headspace:

| Compounds | % of Total Volatiles in Headspace |
|---|---|
| Acetaldehyde | 0.40 to 3.5 |
| Methanol | 0.15 to 1.55 |
| Ethanol | 4.00 to 47.0 |
| Ethyl butyrate | 0.25 to 2.50 |
| Hexanal | 0.05 to 0.35 |
| Alpha-pinene | 0.18 to 0.32 |
| Myrcene | 0.70 to 1.65 |
| Limonene | trace to 90.0 |

These are selected compounds, many others are also present, as is evident from Figure 6.

The level of methanol and ethanol are lower than commercial essences. The level of alpha-pinene, myrcene, limonene are higher than commercial essences.

Optionally, the starting juice or carrier solution can be pasteurized. The feed material is heated to a temperature of from about 176°F (80°C) to about 203°F (95°C) for from about 5 to about 12 seconds. The feed is then rapidly cooled to a temperature of about 32°F (0°C) to about 40°F (4.4°C). This system used to pasteurize the juice or carrier must be closed and must be conducted in a manner such that the juice is not exposed to an oxidative atmosphere.

Evaporation of the Stripped Juice

The stripped juice is concentrated by conventional evaporation techniques.

Ideally the evaporation economically removes water to increase the concentration of the juice to 60° Brix or higher (about 60% to about 75% sugar solids). The juice can be stored safely and economically at these concentrations. In addition, the evaporation step will collect any aroma and flavor materials which were not removed in the stripping step. In addition, the evaporation should be carried out in the manner that artificial, cooked or manufactured flavors are minimized.

Preferably, a multi-stage, multi-effect vacuum evaporator such as the TASTE (thermally accelerated short time evaporator) is used. This type of evaporator is common in the Florida citrus industry. The temperature profile used in this invention is controlled so that the maximum juice temperature is about 160°F (71°C) to about 210°F (98.9°C). A noticeable "cooked" flavor develops in citrus juice concentrate even with the short residence time of these evaporators when the juices exceed this temperature. The evaporators can be operated using either forward flow or mixed flow. The vessel where the steam is flowing is called an effect. The vessel where the juice flows is the stage. Forward flow occurs when the juice is fed to the same vessel as the steam and then follows a path through different vessels in parallel to the vapor flow. Mixed flow occurs when the juice is introduced to one of the intermediate vessels where it is evaporated by vapor generated in a preceding vessel. After partial concentration the juice is then fed to the first vessel where it is evaporated using fresh steam. Evaporation takes place in one or more stages following the feed stage and also following the first effect.

In each case, forward or mixed flow, the steam and the vapor flow in the first effect and in subsequent effects, in the same pattern. The vapor starts at the highest pressure and ends at the stage with the lowest pressure. Any suitable vacuum system can be used to remove non-condensables, but typically this will be a multi-stage steam ejector system. The process is operated at pressures of about 2 inches to about 4 inches of mercury absolute.

In a multiple effect evaporator, steam is used only on the first effect and each subsequent effect is heated by vapor evaporated in the preceding stage. This vapor is primarily water but it also contains volatile materials originally in the citrus juice. These volatiles can be recovered by removing part of the vapors from the heating side of the evaporation effect. This removal stream is passed through a series of fractionators, condensers, and coolers to obtain a cold liquid essence rich in volatile fractions. This procedure is commonly practiced in the citrus industry.

The evaporator essence collected in the process herein is significantly different from the commercial essences since most of the highly volatile materials have previously been removed from the juice in the stripper.

This evaporator essence can be added back to the concentrated citrus product in the blend tank or added to the aqueous stripper essence prior to the concentration step. If the water content of the evaporator essence is high, or if the evaporator essence is to be stored, then it is more economical to concentrate this evaporator essence.

The evaporated concentrate is cooled and can either be pumped to a blend tank and mixed with other components of the product or further chilled to about 18°F (-7.8°C) and stored in tanks or drums under an inert gas atmosphere such as nitrogen or carbon dioxide. These storage tanks should be shielded from light to prevent oxidative degradation of the concentrate.

Other means of concentrating the stripped citrus juice can be used. These would include reverse osmosis, freeze drying or freeze concentration. Economically, however, it is better to use an evaporation technique especially since the stripped citrus juice does not contain many aroma and flavor volatiles and therefore there is no need to utilize a method which would retain these volatiles.

## Blending

The aqueous stripper essence concentrate and the limonene-based stripper oil essence prepared above can be blended with concentrated stripped juice, sensible pulp, water, peel oil, or other aqueous essence to make a citrus juice concentrate product. These various components are preferably blended as follows. First add the sensible pulp to the mix vessel along with most of the water calculated to reach the final desired concentration. Next add all of the aqueous stripper essence concentrate and enough of the evaporated concentrate to raise the concentration of the mix to from about 12° Brix to about 30° Brix (5%-40% of the evaporated concentrate). To this mixture add the aqueous essence and limonene-based stripper oil and other flavor oils and mix until oil is thoroughly dispersed. The remainder of the evaporated concentrate and water can then be added and mixed.

The aqueous stripper essence or aqueous stripper essence concentrate and limonene-based stripper oil are added back to the concentrated stripper juice (or to any citrus juice concentrate) at levels which impart the aroma and flavors of fresh juice. A 20°-30° Brix aqueous stripper essence concentrate that is added to a 65° Brix evaporated concentrate will be from about 1% to about 25% of the total product. In general, it will be from about 2% to about 20% of the product.

The limonene-based stripper oil will be from about 0.005% (v/v) to about 0.018% (v/v) based on single strength juice, i.e. the diluted concentrate. Other peel or essence oils can also be added to the product.

Figure 3 is a gas chromatogram of the headspace of a frozen orange juice concentrate prepared with aqueous stripper essence, limonene-based stripper oil, and concentrated stripped orange juice. The solids concentration in the concentrate is about 41%.

The concentrated juice can be packed in cans, foil-lined containers, bottles, etc. To insure long-term oxidative stability, the packaging materials should be impermeable to oxygen.

Additionally, the concentrate can be packed under an inert atmosphere such as nitrogen.

Both quantity and size of the pulp affect the consumer acceptability of orange juice concentrates. Preferably, the amount of pulp will be 6% to 12% (volume/volume) having a size less than 0.5 mm. and 1% to 3% having a size 0.5 to 2.0 mm. These pulp percentages are measured by standard citrus industry methods.

### Orange Juice Aroma and Flavor Condensates

Gas chromatographic analysis of the volatile portion of orange juice indicates that there are at least 250 compounds, and probably considerably more present in the volatile portion of the orange juice. Complete identification of all of these volatile compounds has not yet been achieved. The volatile compounds which are believed responsible for the fresh aroma and flavor character of the citrus juice concentrate are composed of alcohols, carbonyls, acids, esters, terpenes, and other volatile hydrocarbons. The low boiling fraction contains large amounts of methanol, ethanol and acetaldehyde. Other key low boiling compounds are ethyl butyrate and hexanal. The aroma flavor condensate obtained from the stripping of orange juice contains at least 60% of the flavor and aroma compounds which were present in the original juice.

When steam is used as the stripping agent the aroma and flavor condensate can be separated into two phases: an aqueous stripper essence and a limonene-based stripper oil.

The limonene-based stripper oil is different from essence oil, peel oil and juice oil. Juice oil is the water-insoluble oil obtained by centrifuging fresh juice. This limonene stripper oil is less oxidized and contains higher chain length aldehydes than conventional oils.

### Aqueous-based Stripper Essence

The aqueous-based stripper essence comprises the aqueous phase of the aroma flavor condensate obtained from stripping fresh orange juice with steam. It contains the water-soluble orange juice aroma and flavor volatile.compounds in a very dilute solution. The aqueous-based stripper essence has from about 0.01% to about 2% ethanol. Figure 7 is a gas chromatogram of the alcohol fraction of an aqueous-based stripper essence from Valencia oranges.

The essence is characterized by having a ratio of low-boiling (highly volatile) water-soluble components to high-boiling (lower volatile) water-soluble components of from about 0.1:1 to about 0.9:1. Preferably, this ratio will be in the range of from about 0.2:1 to about 0.3:1.

The aqueous stripper essence is analyzed by the direct injection gas chromatographic procedure described later. The gas chromatographic procedure uses a column which separates the materials by adsorption. An internal standard, cyclohexanone, is used. The materials which elute before the cyclohexanone are the lower molecular weight compounds and thus are the low-boiling compounds. Those which elute after the cyclohexanone are the high-boiling compounds. To determine the ratio of these two compositions, the total area or total concentration of the low-boiling materials is divided by the total concentration of the high-boiling materials. Methanol, ethanol and acetaldehyde are not included in this ratio because of their high concentration relative to the other components. The internal standard is not added to either composition. Figure 5 is a chromatogram of an aqueous stripper essence from Valencia oranges.

The aqueous stripper essence has a concentration range of aroma and flavor materials as illustrated in Table 1. Many other volatiles are present as is evident from the chromatogram.

## TABLE 1

A typical aqueous stripper essence from orange juice has the following composition:

| Component | Concentration ppm (u g/ml essence) |
|---|---|
| Hexanal | 0.8 to 3.5 |
| Ethyl butyrate | 4.0 to 7.0 |
| t-2-hexenal | trace |
| 3-hexene-1-ol | trace |
| Hexanol | trace |
| Octanal | 3.0 to 6.0 |
| Octanol | trace to 2.5 |
| Linalool | 6.0 to 15.0 |
| Nonanal | trace |
| Alpha-terpineol | trace to 2.00 |
| d-carvone | trace |
| Geraniol | trace |
| Geranial | 1.0 to 3.0 |
| Valencene | 0 to 4.0 |
| Myrcene | trace to 3.0 |
| d-limonene | trace to 72 |
| Ethanol | 0.01% to 2% |
| Methanol | 0.01% to 0.5% |
| Acetaldehyde | 0.01% to 1.5% |

The extremely low levels of the six carbon hydrocarbons is important. The t-2-hexenal, 3-hexene-1-ol, hexanol and hexanal contribute to the "green" or apple-like aroma of certain essences. The fact that these materials are at very low concentrations or are absent in this aqueous stripper essence makes it taste less "green" and more citrusy or orange-like than conventional products.

Limonene-based Stripper Oil

The limonene-based stripper oil is the water-insoluble fraction of the stripper aroma flavor condensate. This composition contains the water-insoluble aroma flavor compounds in a limonene matrix.

When orange juice is stripped of its volatiles, the limonene-based stripper oil essence composition comprises a minimum of about 695 (mg/ml) of limonene. The composition is further characterized by comprising less than 1.1 mg/ml of linalool and less than 1.1 mg/ml of nonanal, the ratio of nonanal to linalool being from about 0.5:1 to about 4:1. Preferably, the ratio of nonanal to linalool will be between 0.5:1 and 2:1.

The limonene-based stripper oil of orange juice is fruity and most faithful to the flavor of orange juice. It is higher in its concentration of longer chain aldehydes. This may contribute to its more mellow or mild flavor.

A typical limonene-based stripper oil essence derived from orange juice has a density of between 0.75 and 0.9 g/ml.

A typical limonene-based stripper oil essence comprises the following amounts of representative compounds listed in Table 2:

## TABLE 2

| Components | Concentration (mg./ml.) |
|---|---|
| Ethyl Butyrate | 0.15 to 0.75 |
| alpha-pinene | 2.20 to 7.00 |
| Sabinene | 0.40 to 4.50 |
| Myrcene | 15.0 to 20.0 |
| Octanal | 1.50 to 3.00 |
| d-Limonene | 695 to 800 |
| gamma-terpinene | 0.02 to 0.08 |
| Octanol | 0 to 0.20 |
| Linalool | 0.30 to 1.10 |
| Nonanal | 0.30 to 1.10 |
| Citronellal | 0.10 to 0.75 |
| alpha-terpineol | trace to 0.20 |
| Decanal | 3.5 to 5.75 |
| Neral | 0.15 to 0.60 |
| d-carvone | trace to 0.20 |
| Geraniol | trace to 0.7 |
| Geranial | 0.01 to 1.0 |
| Perillaldehyde | 0.10 to 0.30 |
| Dodecanal | 0.31 to 0.72 |
| Valencene | 10.0 to 25.0 |
| Nootkatone | 0.25 to 2.0 |

Figure 4 is a gas chromatogram of a limonene-based stripper oil from Valencia oranges.

The limonene-based stripper oil has a fresher flavor than conventional essence oils, including "juice oil" which is obtained by centrifuging juice. This is primarily due to the nonanal:linalool ratio. The ratio of the sum of the alcohols to the sum of the aldehydes is also important, it is from about 7:1 to about 28:1.

The sum of the aldehydes is obtained by adding the concentration of the following materials: octanal; hexanal; citronellal; decanal; neral; geranial; perillaldehyde; and dodecanal. The sum of these materials ranges from 7.5 to 11 mg/ml.

The sum of the alcohols is obtained by adding the concentration of the following materials: octanol, linalool and geraniol. This concentration ranges from 0.40 to 1.1 mg/ml.

The oxidation products, alpha-terpineol and d-carvone are also lower in the limonene-based stripper oil than in most conventional essence oils. The sum of the concentration of the oxidation products: linalool, alpha-terpineol, d-carvone, geraniol, citronellal and nootkatone is lower than conventional essence oils. The range is from .50 mg/ml to 2.75 mg/ml. Conventional essence oils contain from 3.3 to 126 mg/ml of these products.

The lack of oxidation products is an indication of the non-degrading manner in which these materials were removed from the orange juice.

## EXAMPLE I

The pulp greater than 0.5 mm. is removed from Valencia orange juice (1000 lbs. of 12.5° Brix) by a Brown AMC juice finisher. The juice is stripped in a 10-inch diameter 2-stage pilot plant stripping column. The juice is heated (with low pressure steam) in a heat exchanger from 35°F (1.7°C) to 125°F (51.7°C) and is sprayed into the first stage of the stripper through a TF8 FCN 303 Bete fog nozzle at 20 psig pressure. The juice is collected about halfway down the column and pumped out and through a second heat exchanger to raise the temperature to 140°F (60°C). This reheated juice is then sprayed into the stripper a second time through a TF10 FCN 303 Bete fog nozzle. At this temperature, the juice flashes to the stripper equilibrium temperature of 125°F (51.7°C). The stripped juice is pumped from the bottom of the column and cooled to 50°F (10°C) and stored in drums until enough material to evaporate has been collected.

The stripping column is operated at a pressure of 4 inches Hg. absolute. Juice is stripped at a rate of 250 lbs./hr. Steam

is sparged into the bottom of the column (about 30 lb./hr.) and passed countercurrent to the juice to aid in removing and carrying off the volatile aroma and flavor materials. The stripping steam together with water which flashed in the second stage and the stripped volatile aroma materials are condensed in a series of condensers. The first condenser operates at 70°F (21°C) and at 4 inches Hg. absolute and condenses most of the water and some of the volatiles. The second condenser operates at 35°F (1.7°C) and at 4 inches Hg. absolute and condenses more water and volatiles while the last condenser operates at -60°F (-51°C) and at 4 inches Hg. absolute and condenses virtually all the remaining water and volatile materials. Previous tests in which two liquid nitrogen cooled traps in series are added to the system after the -60°F (-51°C) condenser indicated only trace amounts of condensable materials indicating substantially complete condensation in the first three condensers. At the conclusion of the stripping run, a portion of the liquid condensate collected from the first two condensers is poured into the third condenser to melt and dissolve the frozen material. This mixture is then carefully added to the remainder of liquid condensate from the run.

Gas chromatographic analyses for the aromatic volatile materials show the following results in comparing the amount removed (feed juice and stripper bottoms) and the amount recovered in the condensate.

|  | As % of Component Present in Feed Juice | |
| --- | --- | --- |
|  | Removed | Recovered |
| Acetaldehyde | 94 | 73 |
| Ethyl butyrate | 98 | 62 |
| Methanol | 77 | 69 |
| Ethanol | 81 | 75 |

The removal and recovery of the highly volatile materials of which these are an example means that the aroma flavor condensate will contribute importantly to the "fresh" flavor. The difference between the amount removed and that recovered in the condensate can be explained on the basis of exposure of volatile materials during transfer between vessels. It would be expected that recovery would be closer to the removal in a well-designed closed collection system such as would be used for continuous commercial operation.

The stripper bottoms are concentrated in a five-stage, five effect TASTE pilot plant model from Gulf Machinery Corp. evaporator operated in a mixed flow mode. The product temperature profile is 145°F (62.8°C), 127°F (52.8°C), 185°F (85°C), 165°F (73.9°C), 103°F (39.4°C). Essence is recovered from the shell of the fourth effect (boil-off from the feed). Pressure in the evaporator ranged from 2 inches Hg. absolute at the ejector to about 21 inches Hg. absolute in the third stage. The stripper bottoms are concentrated from 12.7° Brix to 65° Brix and 0.4 lbs. of essence are collected for each 100 lbs. of bottoms fed. The feed rate to the evaporator is 950 lb./hr.

The aroma condensate from the stripper is blended with stripper bottoms to form a mixture of 4° Brix concentration to feed to the freeze concentrator. In this example, aroma condensate from the Valencia juice is blended with aroma condensate from both Hamlin and Pineapple juices which are stripped in the same way. This is done to obtain enough aroma condensate feed material to easily operate the pilot-sized continuous freeze concentrator (Grenco Model W-8).

Pulp is removed from the starting juice for freeze concentration in a bowl-type centrifuge (Westfalia Corp., Model #SB-7-06-576) operating at a speed of 9500 rpm. Nitrogen is passed into the bowl of the centrifuge during the separation. The separated serum is poured into a refrigerated supply tank held at 32°F (0°C) and equipped with a 90 micron filter at the exit. The aroma flavor condensate is added to the serum. The sugar solids concentration of the serum/condensate solution is 4%. The tank is shielded from the light. A nitrogen gas blanket is continually maintained in the supply tank.

A Grenco freeze concentration unit, Model W8, is fed from the refrigerated supply tank. The refrigeration unit and recirculation pump circulating the serum/condensate from the recrystallizer through the scraped wall heat exchanger are started and the serum/condensate is cooled down to 28°F (-2.2°C). Cooling down the serum/condensate solution to 28°F (-2.2°C) and formation of recrystallized ice is achieved after 2 hours at which point also the removal of ice via the wash column is started. After removal of the ice from the unit the solid concentration begins to increase steadily to reach a concentration of 25% after a 7 hour period. At this point the aroma flavor concentrate is removed.

The aroma flavor concentrate which is obtained represents a concentration of volatile aroma and flavor materials about 60 times that found in the starting juice.

GC analysis of the aroma condensate feed material, the aroma flavor concentrate, and the water removed indicated that about 99% of the most volatile components (acetaldehyde, methanol, ethanal and ethyl butyrate) remained in the concentrate.

The aroma flavor concentrate was added back to the concentrate at 16% of the final solution. Pulp was added (8.7%) and the peel oil level was adjusted to 0.010% (v/v). The aromatized concentrate was packaged in zip lock cans.

### EXAMPLE II

The aroma flavor condensate was mixed with sucrose to make a solution of approximately 6.2% concentration of sucrose. This solution was concentrated using a DDS lab module 20 reverse osmosis apparatus available from Niro Atomizer. An HR-98 (DDS, polysulfone-polyamide composite membrane) was used. The volatiles plus carrier solution was concentrated at 60°F and 50 bars pressure. The final concentration was 25.8%.

The aroma flavor concentrate prepared in this manner retained 85% of the volatiles. This aroma flavor concentrate is blended with an evaporated concentrate to produce superior orange juice concentrate which when diluted to single strength tastes like fresh orange juice.

## EXAMPLE III

Valencia orange juice which had been extracted using Brown AMC extractors was finished in Brown AMC finishers to remove pulp larger than about 0.5 mm. A portion of this juice was pumped to a 3-stage production stripping column at the rate of 25,000 lb/hr.

The juice was heated to 130°F before entering the first stage where it was sprayed into the stripper through 7-3/8" stainless steel pipe nipples. Since the juice was slightly above the equilibrium temperature and since it contained some dissolved air which would come out of solution, the expanding released air and small quantities of flashed water vapor caused the juice coming from the pipe nipples to be sprayed, the spray covering the entire cross section of the stripper. Juice was collected from the first tray and pumped through a second heat exchanger where it was reheated to 130°F and resprayed, this time through 7TF14FCN Bete Fog nozzles. The juice from the second stage was pumped through a pipeline containing a direct injection steam nozzle and was reheated to a temperature of 145°F and flashed into the stripper as in the first stage. The juice from the bottom of the stripper was pumped through a plate and frame heat exchanger to be cooled by the incoming juice before being pumped to the TASTE evaporator feed tank.

Culinary steam was sparged into the stripper near the bottom, at a rate which when combined with all of the flashed vapor would give a cut rate of 0.8 lb steam/lb of sugar solids. Since the Valencia juice in this example was at 12.2° Brix, the total steam flow was 2440 lb/hr.

The vapors passed up through the stainless steel wire gauze mist eliminator and about 1 ft of Goodloe-type wire gauze type packing to a 2-stage shell and tube condenser. The first stage was cooled with cooling tower water at about 85°F and the second stage was cooled using 35°F glycol so that the condensate was pumped from the second stage at a temperature of about 38°F. The condensate, which is a mixture of water and water-insoluble phases, was collected in a cold wall condensate collection tank and blanketed with nitrogen gas. The vapors from the second stage cooled condenser passed through one of two low temperature condensers. These condensers used liquid ammonia as the refrigerant at about -50°F. The vapors were condensed as frost on the shell side of the tubes which had previously been pre-frosted with steam. These two condensers were used alternately; while one was condensing, frost was removed from the other by pumping condensate from the condensate collection tank through it.

When a condensate collection tank was full, the essence condensate was pumped through a DeLaval SR194 stacked disc hermetic centrifuge at a rate of about 5 gpm. The centrifuge continuously separated the essence condensate into two clear streams. The limonene-based stripper oil was taken off as the light component and collected under nitrogen gas in 5 gallon lined pails. These pails were stored at -10°F when full. The heavier aqueous stripper essence was pumped to a cold wall storage tank and held at 35-40°F under nitrogen until concentrated in the next step.

Part of the stream of stripped juice pumped from the bottom of the stripper earlier had been passed through a continuous stacked disc centrifuge to reduce the pulp content to about 0.5% v/v. This depulped juice was used as a carrier and was blended with the aqueous stripper essence to form a 4° Brix feed stream for the freeze concentrator. The concentrated stripper essence exiting the freeze concentrator was 25° Brix. The water (ice) removed contained less than 5% of the volatile materials fed to the freeze concentrator. This aqueous stripper essence concentrate was collected in a cold wall tank and held at about 28°F until being pumped into nitrogen flashed 35 gallon essence drums. The aqueous stripper essence concentrate was stored and frozen at -10°F.

The stripper bottoms are pumped through an Alfa-Laval type SRPX-417-HGV stacked disc centrifuge to reduce the sinking pulp level to meet the requirements of the State of Florida Department of Citrus. Pulp removed from part of this stream to make serum for the freeze concentrator is added back to the main stream flow prior to centrifuging.

The stripper bottoms were concentrated to 65° Brix in an 8-stage, 6-effect TASTE evaporator manufactured by Gulf Machinery Co. The evaporator was operated using mixed flow and the temperatures leaving each stage were about: (1) 172°F; (2) 205°F; (3) 193°F; (4) 154°F; (5) 137°F; (6) 106°F; (7) 103°F; and (8) 104°F. The concentrate was stored at -10°F in 55-gallon drums using two polyethylene bag liners.

Evaporator essence was collected from the first boil-off using an essence collection system furnished by Gulf Machinery Co. After collection the essence was allowed to separate into 2 phases and was decanted to give an aqueous evaporator essence and an evaporator essence oil.

Gas Chromatographic Headspace Analysis

For investigation of aroma volatiles from orange juice, headspace samples were taken by passing helium over the orange juice samples to be analyzed. The automated purge and trap headspace analytical system consists of a Hewlett Packard 7675A purge and trap sampler and a Hewlett Packard 5880A capillary column gas chromatograph.

A 1 ml. sample of orange juice is placed into a sampling container (15 ml. volume culture tube) equipped with a Teflon(R)-coated stirring bar. After equilibration in a water bath (27 ± 1°C) for 5 minutes with magnetic stirring, the volatile compounds were swept into a room temperature adsorption tube filled with Tenax, a porous polymer, at a helium rate of 10 ml./min. for 1 minute. This hydrophobic polymer selectively absorbs the organic volatiles and the helium stream containing water is vented to atmosphere. Then the Tenax tube was flushed one more minute with clean, dry helium gas (10 ml./min., flow rate) to remove water from the trap. This water can cause clogging problems by ice formation in the cold trapping system of the capillary column.

Tenax is a porous polymer based on 2,6-diphenyl-p-phenylene oxide available from the Applied Science Division of Milton Roy Co. This porous polymer is used because it is hydrophobic, shows excellent thermal stability, and does not react with most organic aroma volatiles. The adsorption tube is filled with 200 mg. of Tenax (80/100 mesh) and a small plug of glass wool at each end to keep the adsorbent in place. Before use, the Tenax tube is always cleaned for 16 minutes at 250°C in a stream of dry helium gas (10 ml./min.).

Sample injection into a capillary column was performed via desorption of the Tenax trap and reconcentration of the desorbed sample onto the first portion (2 inches) of the capillary column. Thermal desorption was effected by heating the Tenax tube to 200°C for 8 minutes with helium flowing through it at a flow rate of 2.7 ml./min. The front portion of the capillary column is located inside a trap cooled with liquid nitrogen (-150°C). The sample is swept from the Tenax tube onto the capillary column where it condenses out in a narrow band at liquid nitrogen temperature. For injection of sample into capillary column, after cooling, this cold trap was heated very rapidly: it takes about 20 seconds to reach 140°C and the temperature is held at 140°C for 1 minute. The helium switching valves and the cooling and heating sequences of the cold trap were controlled automatically in a pre-programmed mode.

The column used in this experiment is a Durawax-3 fused silica capillary column (J&W Scientific, Inc., 0.32 mm. I.d x 60 m. length). Durawax-3 is a stabilized liquid phase which contains 50% of Carbowax-20M and 50% of methyl silicone. The carrier gas flow (He) at the capillary column outlet was 2.7 ml./min. (linear gas velocity = 34.5 cm./sec. at 40°C). The injection port and flame ionization detector temperatures were set at 180°C and 220°C, respectively. The column oven temperature was held at 50°C for 18 minutes, raised to 70°C at 1.5°C/min., then raised at 5°C/min. to 145°C and held for 8 minutes.

The compounds were identified by the retention times of peaks obtained for known standards using the technique of co-injection and peak enhancement. Integration of peak area was obtained by use of Hewlett-Packard 5880A series terminal, level four. This automated headspace analytical system provides good precision for most of the aroma compounds (percent relative standard deviation = 5.0 - 14.7%, n = 6). Orange juice samples were analyzed as single strength, and concentrated aroma condensate and aqueous essences were diluted with water to reach the linear range of the gas chromatographic detector response.

Figures 3 and 6 are representative chromatograms of a frozen orange juice concentrate product and of a concentrated aqueous essence.

## Gas Chromatographic Methods

B.  Aqueous Stripper Essence Analysis

    a.  Sample preparation

        1.  Standard Solution

Absolute ethanol (10 ml.) is added to a 50 ml. volumetric flask. The components listed in Table 1 are added. After all of these components are added to the flask, the solution is diluted to 50 ml. with ethanol.

### Table 1

### Composition of Standard Mixture

| Components | Volume of Pure Compound ($\mu$l) | ppm (wt./wt.) in Calibration |
|---|---|---|
| Hexanal | 50 | 4.07 |
| Ethyl butyrate | 150 | 13.18 |
| Hexanol | 50 | 8.14 |
| Octanal | 50 | 4.06 |
| t-2-Hexenal | 50 | 4.25 |
| 3-Hexene-1-ol | 50 | 4.24 |
| Alpha-pinene | 50 | 4.29 |
| Beta-pinene | 50 | 4.32 |
| Myrcene | 100 | 8.13 |
| Octanol | 100 | 8.21 |
| Limonene | 200 | 16.82 |
| Linalool | 150 | 13.00 |
| Nonanal | 50 | 4.13 |
| alpha-Terpineol | 100 | 9.34 |
| Decanal | 50 | 4.15 |
| Citral | 100 | 8.89 |
| d-carvone | 50 | 4.80 |
| Geraniol | 25 | 2.22 |
| Valencene | 50 | 4.21 |

    2.  Internal Standard Solution

A small volume (2-3 ml.) of distilled water is added to a 10 ml. of volumetric flask. Cyclohexanone (25 $\mu$l) is added and the water/cyclohexanone mixture is brought to volume with distilled water.

### 3. 15% Ethanol Solution

Pipette 15 ml. of absolute ethanol into 100 ml. of volumetric flask and bring the ethanol to volume with distilled water. This standard should be in a sealed container.

### 4. Preparation of Calibration Mixture

Bring 15% ethanol solution, internal standard solution and standard mixture to room temperature. Pipette 4 ml. of 15% ethanol solution into a 2 dram vial using 5 ml. glass pipette. Spike with 20 µl internal standard solution and 20 µl of standard mixture. Insert syringe needle to bottom of vial when adding standard mixture because it will climb up the inside wall of the glass container. Cap the container tightly and place it in an ultrasonic bath for 10 minutes to thoroughly mix. Remove the container from the bath, invert several times and inject 1 µl into G.C. The calibration mixture must be used as soon as it is made.

### 5. Analytical Sample Preparation

Rinse 5 ml. glass pipette with the sample twice. Pipette 4 ml. of sample into 2 dram vial and spike with 20 µl of internal standard solution. Cap the sample container tightly and place in ultrasonic bath for 10 minutes. Invert the sample several times and inject 1 µl into G.C.

### b. Analytical Procedure

A Hewlett-Packard 5880A Gas Chromatograph equipped with a capillary column injector is used. A level 4 data terminal with basic program and tape cartridge are attached to obtain a computer read-out of the data.

1.  Conditions for HP 5880A G.C.

Air flow rate          :     250 ml./min.

Hydrogen flow rate     :      30 ml./min.

Nitrogen flow rate     :      30 ml./min. (make up gas)

Helium flow rate       :       3 ml./min. (carrier gas)

                                (13.5 psi setting)

Split flow               :       3 ml./min.

Septum purge flow     :       3 ml./min.

DB-5 fused silica capillary column (0.32 mm. x 30 m., J&W Scientific) straight direct injection liner chart speed: 0.5 cm./min.

    Att: 2↑0

2.  Temperature Profile

Oven temperature 40°C, limit of 405°C. The oven is heated at 40°C for 5 minutes.

The oven is then programmed to rise 2.0°C/min. to a temperature of 140°C. Then the oven rises at 6.0°C/min. to a final value of 260°C, and is held there for 10 minutes.

3.  Calibration of Instrument

Inject 1 μl of calibration mixture into the G.C. The calibration spectra should show the following peaks:

## Calibration Table

| Peak | Retention Time | Amt/Area | Name |
|---|---|---|---|
| | | (response factor X10$^{-4}$) | |
| 1 | 11.031 | 1.77 | Hexanal |
| 2 | 11.222 | 2.49 | Et.Butyrate |
| 3 | 14.739 | 2.22 | t-2-hexenal |
| 4 | 15.040 | 2.19 | 3-hexene-1-ol |
| 5 | 16.047 | 1.98 | Hexanol |
| 6 | 17.761 | 2.10 | Cyclohexanone |
| 7 | 21.130 | 1.84 | Alpha-Pinene |
| 8 | 24.642 | 1.60 | Beta-Pinene |
| 9 | 25.893 | 1.611 | Myrcene |
| 10 | 26.806 | 1.45 | Octanal |
| 11 | 28.949 | 1.16 | Limonene |
| 12 | 32.342 | 1.66 | Octanol |
| 13 | 34.712 | 1.44 | Linalool |
| 14 | 35.062 | 1.46 | Nonanal |
| 15 | 41.904 | 1.64 | Alpha-Terpineol |
| 16 | 42.976 | 1.24 | Decanal |
| 17 | 45.663 | 1.81 | Neral |
| 18 | 45.936 | 1.52 | d-Carvone |
| 19 | 46.619 | 2.00 | Geraniol |
| 20 | 47.830 | 1.35 | Geranial |
| 21 | 61.200 | 1.34 | Valencene |

4.  Calculations:

Relative Peak Area =

$$\frac{\text{Peak Area of Component}}{\text{Peak Area of Internal Standard}}$$

Relative Response Factor =

$$\frac{\text{Response Factor of Component (amt/area)}}{\text{Response Factor of Internal Standard (amt/area)}}$$

Amount of Component (mg/ml) =

(Relative Peak Area)(Relative Response Factor) (Amount Internal Standard)

Figure 5 is a representative chromatogram.

C. Quantitative Analysis of Orange Oil Essence
By Capillary Column Gas Chromatography

This method provides a direct injection of oil essence into a capillary column gas chromatograph and automatically calculates absolute amount (mg./ml.) and weight % of calibrated components. Two internal standards (propyl benzene and $C_{10}$ FAME [FAME is methyl decanoate]) are used to calculate relative response factors. When pure components are not available, a component of similar structure was used to calculate a response factor. This procedure does not need an adjustment to compensate for the non-volatile components in oil essence because each component is calibrated individually. This method is good only for orange oil essence (cold pressed orange oil, stripper oil, commercial orange oil essence, etc.). If this technique is to be applied to other types of citrus oil (grapefruit, lemon, etc.) only one internal standard (propyl benzene) is used.

Internal Standard Solution

Add a small volume (10-20 ml.) of ethyl acetate into 100 ml. of volumetric flask and spike with 300 μl of propyl benzene and 100 μl of $C_{10}$ FAME. Bring to volume with ethyl acetate. Store this solution at low temperature (-20°C to -40°C). An alternate method of preparation is to mix propyl benzene and $C_{10}$ FAME in a 3:1 ratio (3 ml. propyl benzene to 1 ml. $C_{10}$ FAME) and spike 400 μl of this mixture to 100 ml. or ethyl acetate as above. Store at -20°C to -40°C.

Standard Solution

| Components | Volume of Pure Compound (μl) | Mg/ml in Calibration |
|---|---|---|
| Alpha-pinene | 400 | 3.73 |
| Beta-pinene | 100 | .94 |
| Myrcene | 2000 | 17.42 |
| Octanal | 450 | 4.02 |
| Limonene | 85000 | 777.10 |
| Alpha-terpinene | 50 | .46 |
| Octanol | 100 | .90 |
| Linalool | 300 | 2.84 |
| Nonanal | 100 | .90 |
| Citronellal | 100 | .93 |
| Alpha-terpineol | 100 | 1.02 |
| Decanal | 600 | 5.40 |
| Citral (neral) | 80 | .77 |
| D-carvone | 50 | .52 |
| Geraniol | 50 | .48 |
| Citral (geranial) | 120 | 1.16 |
| Perillaldehyde | 50 | .45 |
| Dodecanal | 100 | .91 |
| Valencene | 100 | .91 |
| Nootkatone | 50 | .46 |
| Ethyl butyrate | 200 | 1.22 |
| Ethanol | 200 | 1.22 |

Procedure

A Hewlett Packard 5880A G.C. with Capillary column injector is used. The instrument is equipped with a level 4 data terminal with basic program and tape cartridge.

Procedure

A. Conditions for HP 5880A G.C.

Air: 250 ml/min.

Hydrogen: 30 ml/min.

Nitrogen: 30 ml/min.

Helium: 3 ml/min. (13.5 psi setting)

Splitflow: 150 ml/min.

Septum purge: 3 ml/min.

DB5 Fused silica capillary column (.32 mm × 30 m, J&W Scientific) Chart Speed:0.5 cm/min.

Attn: 2↑1

Temperature Profile

Initial oven temperature = 40°C with a limit = 405°C. The oven is equilibrated for one minute. The oven is programmed to rise at 2.00°C/min. to a final value of 140°C. The program is then changed to have the oven rise 6.00°C/min. to a final value of 260°C and held there for 10 minutes.

Calibration of Instrument

Add 1 ml. of standard mixture and 1 ml. of internal standard solution into a 1 dram vial. Inject 1 µl of calibration mixture when G.C. is ready and begin the run. After chromatogram (calibration mixture run) is completed, check for proper identification of peaks and retention times.

Analytical Sample Preparation

Rinse 2 ml. glass pipette with the sample, twice. Pipette 1 ml. of oil sample and 1 ml. of internal standard solution into a 2 dram vial. Inject 1 µl of this solution using the solvent plug technique. If the sample is not analyzed immediately it can be stored at low temperature (4°C) for several days without any changes.

## Calibration Table

| Peak | Retention Time | Amt/Area (response Factor $X10^{-4}$) | Name |
|---|---|---|---|
| 1 | 21.038 | 5.40 | Alpha-Pinene |
| 2 | 22.631 | 4.91 | Propyl-Benzene |
| 3 | 24.545 | 5.01 | Beta-Pinene |
| 4 | 25.840 | 7.25 | Myrcene |
| 5 | 26.728 | 6.25 | Octanal |
| 6 | 29.459 | 5.42 | Limonene |
| 7 | 31.397 | 5.02 | Gamma-Terpinene |
| 8 | 32.273 | 7.04 | Octanol |
| 9 | 34.662 | 6.42 | Linalool |
| 10 | 35.005 | 8.71 | Nonanal |
| 11 | 38.891 | 7.44 | Citronellal |
| 12 | 41.852 | 6.99 | Alpha-Terpineol |
| 13 | 42.941 | 10.8 | Decanal |
| 14 | 45.629 | 7.29 | Neral |
| 15 | 46.578 | 6.69 | d-Carvone |
| 16 | 47.190 | 8.21 | Geraniol |
| 17 | 47.800 | 6.42 | Geranial |
| 18 | 48.182 | 5.88 | Perillaldehyde |
| 19 | 51.662 | 7.18 | C10 FAME |
| 20 | 57.207 | 10.3 | Dodecanal |
| 21 | 61.228 | 7.62 | Valencene |
| 22 | 69.871 | 5.91 | Nootkatone |
| 23 | 24.327 | 5.40 | Sabinene |
| 24 | 11.090 | 9.58 | Ethyl-Butyrate |
| 25 | 1.575 | 12.6 | Ethanol |
| 26 | 58.129 | 6.48 | Caryophellen |

Calculations:

Relative peak area = $\dfrac{\text{peak area of component}}{\text{peak area of internal standard}}$

Relative response factor =

$\dfrac{\text{Response factor of component}}{\text{Response factor of internal standard}}$

Amount of component (mg/ml) =

(Relative peak area)(Relative response factor)(Amount of internal standard)

Figure 4 is a representative chromatogram.

C.  Alcohol analysis of aqueous essence by capillary column gas chromatography

This method provides direct injection of aqueous essence into a capillary column gas chromatograph and automatically calculates the absolute amount (mg/ml) and weight percent of ethanol and methanol.  The methanol quantitation will be the sum of methanol and acetaldehyde as these compounds co-elute.  Acetonitrile is used as an internal standard and relative response factors are calculated from its concentration which must remain constant for all samples and calibration mixtures.  In this way the system can make adjustments to the calculations which compensate for any variation in amount of sample introduced.  This method is good for both commercial and aqueous stripper essences, but they must be diluted to a concentration of less than 1 mg/ml ethanol.

Procedure

Conditions for HP 5880A G.C.

Air flow rate: 250 ml/min.

Hydrogen flow rate: 30 ml/min.

Nitrogen flow rate: 30 ml/min.

Helium flow rate: 3 ml/min. (13.5 PSI setting) Split flow: 150 ml/min.

Septum purge: 3 ml/min.

DB5 fused silica capillary column (.32 mm x 30 m, J&W Scientific) Chart speed 1 cm/min.

Attn 2↑2

Temperature Profile

Initial oven temperature = 40°C with an oven limit of 405°C. and an equilibration time of 1 minute. The oven was held at a temperature of 40°C for three minutes, then programmed at a rate of 10°C/min. to 80°C and held there 1 minute.

Calibration of Instrument

Add approximately 70 ml of distilled water to a 100 ml volumetric flask. Spike with 5 μl methanol, 20 μl ethanol, and 20 μl acetonitrile (internal standard) using a 5 and a 25 μl syringe respectively. Bring to volume with distilled water and inject 1 μl when G.C. is read. After run is completed, enter known amount (mg/ml) of ethanol and methanol in calibration table and have integrator calculate response factors (amt/area).

The calibration spectra should show the following peaks:

### List of Calibration Table

| Name | Retention Time | Amt/area (response factor) |
|---|---|---|
| methanol | 1.31 | $5.70 \times 10^{-4}$ |
| ethanol | 1.52 | $4.16 \times 10^{-4}$ |

### Analytical Sample Preparation

(1) for aqueous stripper essence: rinse a 2 ml glass pipette with sample twice. Pipette 1 ml of sample into a 4 dram vial and add 9 ml distilled water using a 10 ml graduated pipette. Spike with 2 µl of acetonitrile. Inject 1 µl into the G.C.

(2) for commercial aqueous essence: rinse 2 ml glass pipette with sample twice. Pipette 0.5 ml of sample into a 100 ml volumetric. Bring to volume with distilled water and spike with 20 µl of acetonitrile. Inject 1 µl into the G.C.

### Calculations:

Relative peak area =

$$\frac{\text{Peak area of component}}{\text{Peak area of internal standard}}$$

Relative response factor =

$$\frac{\text{Response factor of component}}{\text{Response factor of internal standard}}$$

Amount of component (mg/ml) =

(Relative peak area)(Relative response factor)(Amount of internal standard)

Figure 7 is a representative chromatogram.

0110638

<u>CLAIMS</u>

1. A process for producing a citrus aroma and flavor concentrate comprising the steps of:

    (1)   stripping aroma and flavor volatiles from citrus juice with a stripping agent at temperatures of from about 100°F to about 160°F, and pressures of up to about 9 in. Hg. absolute;

    (2)   condensing the volatiles at temperatures of from about 95°F to about -320°F; and

    (3)   concentrating the condensed volatiles.

2. A process according to Claim 1 wherein the stripping agent is steam and the condensed volatiles are separated into a limonene-based stripper essence oil and an aqueous stripper essence, and the aqueous stripper essence is concentrated.

3. A process according to Claim 1 or 2 wherein the stripping step (1) is at pressures of from about 2 inches to about 6 inches of Hg. absolute.

4. A process according to any of Claims 1 to 3 wherein the volatiles are condensed under vacuum in three separate condensers, one condenser at temperatures of from 60°F to 95°F, one from 33°F to 60°F, and one condenser below -50°F.

5. A process according to any of Claims 1 to 4 wherein the concentrating step (3) is freeze concentration or reverse osmosis.

6. A process according to any of Claims 1 to 5 wherein the volatiles are concentrated in the presence of a carrier.

7. A process according to Claim 6 wherein the carrier is citrus juice, preferably orange juice or grapefruit juice.

8. A process according to Claim 6 wherein the carrier is a carbohydrate, optionally also containing citric acid.

9. A process according to Claim 8 wherein the carrier comprises 30% to 50% sucrose, 15% to 25% fructose, 15% to 25% glucose, 0.5% to 1.5% citric acid on a solids basis.

10. A process according to any of Claims 1 to 9 comprising the further steps of concentrating the stripped citrus juice of step (1) and combining the aroma and flavor concentrate of step (3) with the concentrated stripped citrus juice.

11. A process for producing a citrus juice concentrate comprising the steps of:

   (1)   stripping the aroma and flavor volatiles from citrus juice using a stripping agent, at temperatures of from about 100°F to about 160°F and at pressures of up to 9 in. Hg. absolute;

   (2)   condensing the volatiles at temperatures of from about 95°F to -320°F;

   (3)   concentrating the stripped citrus juice of step (1); and

   (4)   combining the condensed aroma flavor volatiles of step (2) with the concentrated juice of step (3).

12. A process according to Claim 10 or 11 wherein the stripped juice is evaporated at temperatures below about 215°F, preferably the evaporation concentrating temperature being a maximum of between about 160°F and about 210°F.

13. A process according to Claim 10, 11 or 12 wherein from 5% to 19% pulp is added to the combined aroma flavour and concentrated juice.

14. A process according to Claim 13 wherein the aroma flavour is added to the concentrated juice at about 2% to about 50%, preferably from about 2% to about 20% of the final product.

15. A process according to Claim 13 or 14 wherein from 6% to 12% pulp having a size less than 0.5 mm and from 1% to 3% pulp having a size of 0.5 to 2.0 mm is added to the final product.

16. A limonene-based stripper oil product derived from oranges comprising:
   (1)  less than 1.1 mg/ml of linalool;
   (2)  less than 1.1 mg/ml of nonanal, the ratio of nonanal to linalool being from about 0.5:1 to about 4:1, preferably from about 0.5:1 to about 2:1; and
   (3)  at least about 695 mg/ml of limonene.

17. A product according to Claim 16 wherein the oil has a density of between about 0.75 and about 0.9 gm/ml.

18. A product according to Claim 16 or 17 wherein the linalool concentration is from about 0.4 mg/ml to 0.95 mg/ml.

19. A product according to any of Claims 16 to 18 wherein the stripper oil contains from about 7.5 to about 11 mg/ml of longer chain aldehydes.

20. A product according to Claim 19 wherein the stripper oil has from about 0.40 to 1.1 mg/ml of long chain alcohols.

21. A product according to Claim 20 wherein the ratio of the long chain alcohols to long chain aldehydes is from 7:1 to about 28:1.

22. A product according to any of Claims 16 to 21 wherein the total concentration of alpha-terpineol, d-carvone, guaniol, citronellal and nootkatone is from about 0.50 mg/ml to about 2.75 mg/ml.

23. An aqueous-based stripper essence derived from oranges comprising:

from about 0.01% to about 2%, preferably from about 0.1% to 1% ethanol and water-soluble volatile compounds, said essence having a ratio of low-boiling water-soluble compounds to high-boiling water-soluble compounds of from about 0.01:1 to about 1:1, preferably from about 0.2:1 to about 0.3:1.

24. An aqueous-based stripper essence according to Claim 23 wherein the amount of six carbon organic compounds is less than 4 mg/ml.

25. An aqueous-based stripper essence according to Claim 24 wherein the six carbon organic compounds consist essentially of hexanal.

26. A concentrated aqueous-based stripper essence comprising the stripper essence of any of Claims 23 to 25 and from about 20% to about 80% of a carrier.

27. A concentrated aqueous-based stripper essence according to Claim 26 wherein the carrier is orange juice solids, preferably in a level of from about 20% to about 45%, or a carbohydrate selected from sucrose, fructose, glucose and mixtures thereof.

# Fig. 1

Fig. 2

## Fig. 3

TIME (MINUTES)

# Fig. 4

TIME (MINUTES)

# Fig. 5

TIME (MINUTES)

## Fig. 6

TIME (MINUTES)

**Fig. 7**

TIME (MINUTES)